# EUROPEAN PATENT SPECIFICATION

(11) **EP 2 910 372 B1**
(45) Date of publication and mention of the grant of the patent: **06.05.2020**
(21) Application number: 13847301.2
(22) Date of filing: 09.10.2013
(51) Int. Cl.: B32B 15/08, B29C 45/14, B32B 7/04, B32B 15/20, B32B 27/18, B32B 27/20, B29K 101/10, B29K 705/00, B29K 305/00

(54) **METAL-RESIN COMPOSITE, AND METHOD FOR PRODUCING SAME**
METALLHARZVERBUNDSTOFF UND VERFAHREN ZUR HERSTELLUNG DAVON
COMPOSITE MÉTAL-RÉSINE, ET PROCÉDÉ DE FABRICATION DE CELUI-CI

(30) Priority: 17.10.2012 JP 2012230011; 17.10.2012 JP 2012230014
(43) Date of publication of application: 26.08.2015
(73) Proprietor: Sumitomo Bakelite Co.,Ltd., Tokyo 140-0002 (JP)
(72) Inventor: KOIZUMI, Koji, Tokyo 140-0002 (JP); WATANABE, Yusuke, Tokyo 140-0002 (JP); TAKIHANA, Yoshihiro, Tokyo 140-0002 (JP); YAMAMOTO, Shinya, Tokyo 140-0002 (JP)
(74) Representative: Ter Meer Steinmeister & Partner
(86) International application number: PCT/JP2013/077438
(87) International publication number: WO 2014/061520

(56) References cited:
- EP-A1- 2 174 766
- EP-A1- 2 298 525
- JP-A- H04 331 150
- JP-A- 2001 026 741
- JP-A- 2003 033 991
- JP-A- 2003 286 328
- JP-A- 2003 286 328
- JP-A- 2004 098 659
- JP-A- 2006 272 886
- JP-A- 2010 131 888
- JP-A- 2011 121 306
- JP-A- 2011 121 309
- JP-A- 2011 121 309
- JP-A- 2012 116 126

## Description

### TECHNICAL FIELD

The present invention relates to a metal resin composite body and a manufacturing method of a metal resin composite body.

### BACKGROUND ART

A technology for joining a resin member and a metal member, for example, is demanded in various fields such as an aircraft, an automobile, a consumer electronics device, and an industrial equipment.

As a method of joining the resin member and the metal member, a method is proposed in which fine concavities and convexities are formed in a surface of the metal member, a thermosetting resin composition is invaded in the fine concavities and convexities, then the thermosetting resin composition is cured, and thus the resin member formed of the thermosetting resin composition and the metal member are joined (for example, Patent Documents 1 and 2 or the like) . Patent Document 3 discloses a metal resin composite body in which a resin member formed of a thermosetting resin composition and aluminium are joined. However, Patent Document 3 does not disclose a glossiness, measured on the basis of ASTM-D523, being greater than or equal 0.1 and less or equal to 30. Moreover, it does not disclose a thermosetting resin composition having a melt viscosity at 175°C of greater than or equal to 10 Pa · s and less than or equal to 3000 Pa · s.

### RELATED DOCUMENT

### PATENT DOCUMENT

[Patent Document 1] Japanese Laid-open Patent Publication No. 2010-274600
[Patent Document 2] Japanese Laid-open Patent Publication No. 2012-116126
[Patent Document 3] JP 2011 121309 A
[Patent Document 4] JP 2011 12 1306A
[Patent Document 5] EP 2 174 766 A1
[Patent Document 6] EP 2 298 525 A1

### DISCLOSURE OF THE INVENTION

However, as a result of consideration of the present inventors, it has been obvious that in the method of joining the resin member and the metal member by allowing the thermosetting resin composition to invade the fine concavities and convexities in a surface of the metal member as in Patent Documents 1 and 2, sufficient joining strength may not be obtained. That is, joining strength of a metal resin composite body obtained by the method as in Patent Documents 1 and 2 is not yet sufficiently satisfied.

Therefore, an object of the present invention is to provide a metal resin composite body having excellent joining strength between a resin member and a metal member.

The present inventors have considered that a surface roughness Ra or Rz of the metal member is adjusted in order to improve the joining strength between the resin member formed of a thermosetting resin composition and the metal member.

However, it has been obvious that it is not possible to improve the joining strength between the resin member and the metal member by simply adjusting the surface roughness Ra or Rz of the metal member.

Therefore, the present inventors have further conducted intensive studies about a design guideline for improving the joining strength between the resin member and the metal member. As a result thereof, it is found that a design guideline is effective in which a criterion such as glossiness of a surface of the metal member is provided, and thus the present invention has been attained.

That is, according to the present invention, there is provided a metal resin composite body according to claim 1. One aspect of said metal resin composite body is that a resin member formed of a thermosetting resin composition and a metal member are joined, in which the metal resin composite body is formed by joining the metal member, in which glossiness of a measurement angle of 60° of a joining surface joining to at least the resin member measured on the basis of ASTM-D523 is greater than or equal to 0.1 and less than or equal to 30, and the resin member.

In addition, according to the present invention, there is provided a manufacturing method of the metal resin composite body according to claim 13. Said method includes, inter alia, a step of disposing the metal member in which glossiness of a measurement angle of 60° of the joining surface joining to at least the resin member measured on the basis of ASTM-D523 is greater than or equal to 0.1 and less than or equal to 30 in a metal mold; and a step of joining the resin member formed of the thermosetting resin composition and the metal member by injecting the thermosetting resin composition into the metal mold, and by curing the thermosetting resin composition in a state in which at least a part of the thermosetting resin

### composition is in contact with the joining surface.

According to the present invention, it is possible to provide the metal resin composite body having excellent joining strength between the resin member and the metal member.

### BRIEF DESCRIPTION OF THE DRAWINGS

The object described above, and other objects, characteristics, and advantages will become more obvious with reference to the following preferred embodiments and the following drawings attached thereto.

FIG. 1 is a perspective view illustrating an example of a structure of a metal resin composite body of an embodiment according to the present invention.
FIG. 2 is a cross-sectional view schematically illustrating an example of a manufacturing device of the metal resin composite body of the embodiment according to the present invention.
FIG. 3 is a diagram illustrating an electron microscope picture showing an enlarged view of a roughened layer existing on a surface of an aluminum alloy sheet obtained in Example 1.
FIG. 4 is a diagram illustrating an electron microscope picture showing an enlarged view of a roughened layer existing on a surface of an aluminum alloy sheet obtained in Example 2.
FIG. 5 is a diagram illustrating an electron microscope picture showing an enlarged view of a roughened layer existing on a surface of an aluminum alloy sheet obtained in Example 3.
FIG. 6 is a diagram illustrating an electron microscope picture showing an enlarged view of a surface of an aluminum alloy sheet used in Comparative Example 1.
FIG. 7 is a diagram illustrating an electron microscope picture showing an enlarged view of a surface of an aluminum alloy sheet used in Comparative Example 2.
FIG. 8 is a schematic view for illustrating an example of a cross-sectional shape of a concave portion in a surface of a metal member of the embodiment according to the present invention.

### DESCRIPTION OF EMBODIMENTS

Hereinafter, embodiments of the present invention will be described with reference to the drawings. Furthermore, in all of the drawings, the same reference numerals are applied to the same constituent parts, and the description thereof will not be repeated. Furthermore, unless otherwise noted, "A to B" indicates "greater than or equal to A and less than or equal to B".

### <Metal Resin Composite Body>

First, a metal resin composite body 100 according to this embodiment will be described.

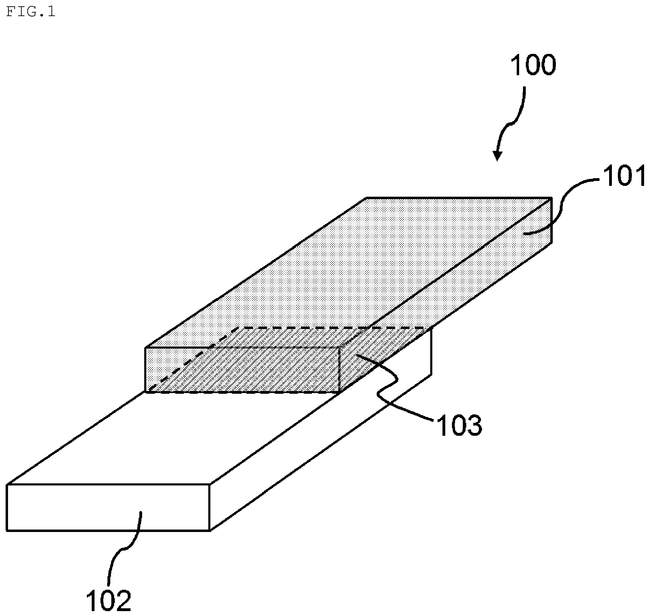

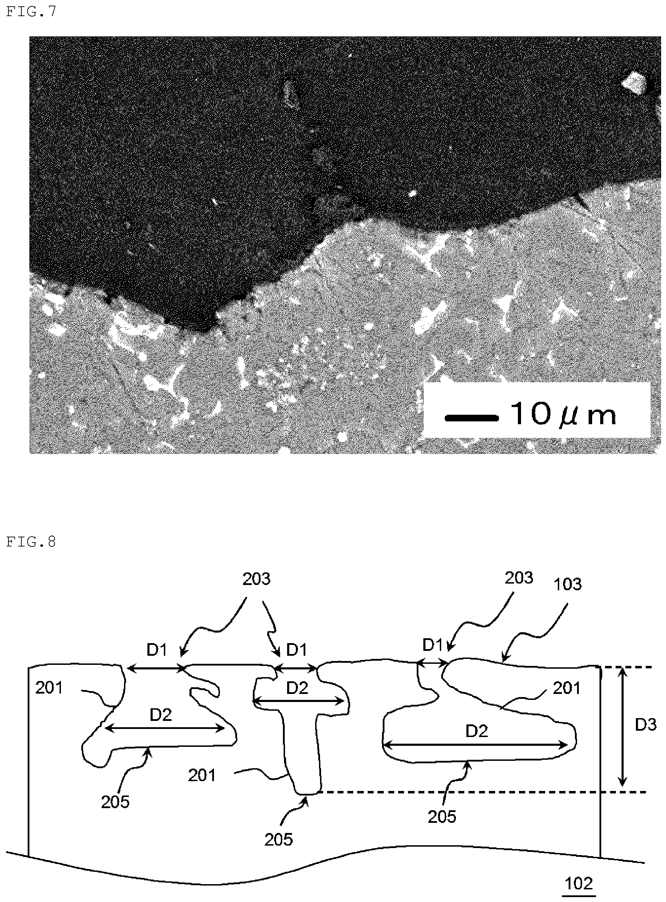

FIG. 1 is a perspective view illustrating an example of a structure of the metal resin composite body 100 of an embodiment according to the present invention. FIG. 8 is a schematic view for illustrating an example of a cross-sectional shape of a concave portion 201 in a surface of a metal member 102 of an embodiment according to the present invention, and illustrates a cross-sectional shape of a concave portion disposed in the surface of the metal member 102. In the metal resin composite body 100, a resin member 101 and the metal member 102 are joined, and the metal resin composite body 100 is obtained by joining the resin member 101 and the metal member 102.

The resin member 101 is formed of a thermosetting resin composition (P) including a thermosetting resin (A) as a resin component. In the metal member 102, glossiness of a joining surface 103 joining to at least the resin member 101 is greater than or equal to 0.1 and less than or equal to 30. Here, the glossiness in this embodiment indicates a value of a measurement angle of 60° which is measured on the basis of ASTM-D523. The glossiness, for example, is able to be measured by using a digital gloss meter (20° and 60°) (GM-26 type, manufactured by Murakami Color Research Laboratory Co., Ltd.) .

In the metal resin composite body 100, an absolute value of a difference (α_{R} - α_{M}) between a linear expansion coefficient α_{R} of the resin member 101 in a range from 25°C to a glass transition temperature, and a linear expansion coefficient α_{M} of the metal member 102 in a range from 25°C to the glass transition temperature of the resin member 101 is preferably less than or equal to 25 ppm/°C, and is more preferably less than or equal to 10 ppm/°C. When the difference in the linear expansion coefficient is less than or equal to the upper limit value, it is possible to suppress thermal stress due to a difference in linear expansion which is generated at the time of exposing the metal resin composite body 100 to a high temperature. For this reason, even when the difference in the linear expansion coefficient is less than or equal to the upper limit value, and even in a high temperature, it is possible to maintain joining strength between the resin member 101 and the metal member 102. That is, when the difference in the linear expansion coefficient is less than or equal to the upper limit value, it is possible to improve reliability of a temperature cycle of the metal resin composite body 100.

Furthermore, in this embodiment, when there is anisotropy in the linear expansion coefficient, the linear expansion coefficient is an average value thereof. For example, in a case of a sheet-like resin member 101, when a linear expansion coefficient in a flowing direction (MD) is different from a linear expansion coefficient in a vertical direction (TD) which is perpendicular to the flowing direction, an average value thereof is the linear expansion coefficient α_{R} of the resin member 101.

The metal resin composite body 100 is not particularly limited, and a metal resin composite body in which the resin member 101 and the metal member 102 are joined without having an adhesive agent is preferable. The metal resin composite body 100 has excellent joining strength even without providing the adhesive agent therebetween. For this reason, it is possible to simplify a manufacturing process of the metal resin composite body 100.

### <Metal Member>

Next, the metal member 102 according to this embodiment will be described.

### (Glossiness)

In the metal member 102, glossiness of the joining surface 103 joining to at least the resin member 101 is greater than or equal to 0.1, is preferably greater than or equal to 0.5, and is more preferably greater than or equal to 1. When the glossiness is greater than or equal to the lower limit value, it is possible to improve joining strength between the resin member 101 and the metal member 102. In addition, the glossiness is less than or equal to 30, is preferably less than or equal to 25, and is more preferably less than or equal to 20. When the glossiness is less than or equal to the upper limit value, it is possible to improve joining strength between the resin member 101 and the metal member 102.

### (Technical Meaning of Glossiness)

The reason that the metal resin composite body 100 having excellent joining strength is obtained when the glossiness is in the range is not obvious, but it is considered that this is because a surface of the joining surface 103 joining to the resin member 101 has a structure in which an anchor effect between the resin member 101 and the metal member 102 is able to be strongly expressed.

In a metal resin composite body of the related art, joining strength between the resin member and the metal member has been improved by adjusting surface roughness Ra or Rz of the metal member, or by disposing an adhesive agent between the resin member and the metal member. However, according to the consideration of the present inventors, it is found that there is a limit to improve joining strength between the resin member and the metal member only by adjusting the surface roughness Ra or Rz of the metal member, or by disposing the adhesive agent.

Therefore, the present inventors focused on a criterion such as glossiness of the surface of the metal member as a design guideline for improving joining strength between the resin member and the metal member. The glossiness is an index indicating an intensity of specular reflection light, and in usual, is used when a gloss intensity is evaluated. On the other hand, it is considered that the glossiness indicates an intensity of light reflected by a specular reflection angle, and thus the glossiness is strongly affected by a surface structure of an object.

When the glossiness is high, it is indicated that a percentage of incident light to perform regular reflection increases, and when the glossiness is low, it is indicated that a percentage of the incident light to perform diffused reflection increases. In general, the percentage of the incident light to perform the diffused reflection increases as the surface structure of the object becomes more disordered. For this reason, the present inventors have considered that the glossiness is effective as an index indicating disorder of the surface structure of the object.

Therefore, the present inventors have further conducted intensive studies by focusing on a criterion such as glossiness of the joining surface of the metal member. As a result thereof, it is found that an anchor effect between the resin member and the metal member is strongly expressed by adjusting glossiness of the joining surface of the metal member to be in a specific range, and thus it is possible to realize a metal resin composite body having excellent joining strength, and thus the present invention has been completed.

### (Roughened Layer)

The metal member 102 includes a plurality of concave portions 201 in the joining surface 103 joining to at least the resin member 101, and it is preferable that the cross-sectional shape of the concave portion 201 has a cross-sectional width D2 which is greater than a cross-sectional width D1 of an opening portion 203 in at least a part between the opening portion 203 to a bottom portion 205 of the concave portion 201.

As illustrated in FIG. 8, the cross-sectional shape of the concave portion 201 is not particularly limited but is able to have various shapes insofar as D2 is greater than D1. The cross-sectional shape of the concave portion 201, for example, is able to be observed by an electron microscope (SEM).

The reason that the metal resin composite body 100 having more excellent joining strength is obtained when the cross-sectional shape of the concave portion 201 has the shape is not obvious, but it is considered that this is because the surface of the joining surface 103 has the structure in which an anchor effect between the resin member 101 and the metal member 102 is able to be more strongly expressed.

When the cross-sectional shape of the concave portion 201 has the shape, the resin member 101 is caught between the opening portion 203 and the bottom portion 205 of the concave portion 201, and thus an anchor effect is effectively exhibited. For this reason, it is considered that joining strength between the resin member and the metal member is improved.

From a viewpoint of further improving joining strength between the resin member 101 and the metal member 102, it is preferable that a roughened layer in which the plurality of concave portions 201 are disposed is formed on the joining surface 103 of the metal member 102. Here, the roughened layer is a region includes the plurality of concave portions 201 disposed in the surface of the metal member 102.

In the metal member 102, a thickness of the roughened layer is preferably greater than or equal to 3 µm and less than or equal to 40 µm, is more preferably greater than or equal to 4 µm and less than or equal to 32 µm, and is particularly preferably greater than or equal to 5 µm and less than or equal to 25 µm. When the thickness of the roughened layer is in the range, it is possible to further improve joining strength between the resin member 101 and the metal member 102. Here, in this embodiment, the thickness of the roughened layer indicates a depth D3 of the deepest concave portion among the plurality of concave portions 201, and is able to be calculated from an electron microscope (SEM) picture.

The depth of the concave portion 201 is preferably in a range greater than or equal to 0.5 µm and less than or equal to 40 µm, and is more preferably in a range greater than or equal to 0.5 µm and less than or equal to 20 µm. When the depth of the concave portion 201 is in the range, it is possible to further improve joining strength between the resin member 101 and the metal member 102. The depth of the concave portion 201, for example, is able to be measured by an electron microscope (SEM) picture.

### (Surface Roughness)

A surface roughness Ra of the joining surface 103 of the metal member 102 is preferably greater than or equal to 1.0 µm and less than or equal to 40.0 µm, is more preferably greater than or equal to 1.0 µm and less than or equal to 20.0 µm, and is particularly preferably greater than or equal to 1.0 µm and less than or equal to 10.0 µm. When the surface roughness Ra is in the range, it is possible to further improve joining strength between the resin member 101 and the metal member 102.

In addition, an average roughness Rz of ten points on the joining surface 103 of the metal member 102 is preferably greater than or equal to 1. 0 µm and less than or equal to 40. 0 µm, and is more preferably greater than or equal to 5.0 µm and less than or equal to 30.0 µm. When the average roughness Rz of the ten points is in the range, it is possible to further improve joining strength between the resin member 101 and the metal member 102. Furthermore, Ra and Rz are able to be measured on the basis of JIS-B0601.

### (Specific Surface Area)

In the metal member 102, a ratio of a real surface area by using a nitrogen adsorption BET method to an apparent surface area of the joining surface 103 joining to at least the resin member 101 (hereinafter, simply referred to as a specific surface area) is preferably greater than or equal to 100, and is more preferably greater than or equal to 150. When the specific surface area is greater than or equal to the lower limit value, it is possible to further improve joining strength between the resin member 101 and the metal member 102. In addition, the specific surface area is preferably less than or equal to 400, is more preferably less than or equal to 380, and is particularly preferably less than or equal to 300. When the specific surface area is less than or equal to the upper limit value, it is possible to further improve joining strength between the resin member 101 and the metal member 102.

Here, the apparent surface area of this embodiment indicates a surface area when it is assumed that the surface of the metal member 102 is smooth without having concavities and convexities. For example, when the surface is in the shape of a rectangle, the surface is expressed by a longitudinal length × a lateral length. On the other hand, the real surface area by using the nitrogen adsorption BET method in this embodiment indicates a BET surface area obtained by an adsorbed amount of nitrogen gas. For example, a nitrogen adsorbed and desorbed amount of a vacuum dried measurement target sample at a liquid nitrogen temperature is measured by using an automatic specific surface area/fine pore distribution measurement device (BELSORPminiII, manufactured by BEL Japan, Inc.), and thus the real surface area is able to be calculated on the basis of the nitrogen adsorbed and desorbed amount.

The reason that the metal resin composite body 100 having more excellent joining strength is obtained when the specific surface area is in the range is not obvious, but it is considered that this is because the surface of the joining surface 103 joining to the resin member 101 has a structure in which an anchor effect between the resin member 101 and the metal member 102 is able to be more strongly expressed.

When the specific surface area is greater than or equal to the lower limit value, a contact area between the resin member 101 and the metal member 102 increases, and thus a region increases in which the resin member 101 and the metal member 102 invade each other. As a result thereof, it is considered that the region exhibiting an anchor effect increases, and thus joining strength between the resin member 101 and the metal member 102 is further improved.

In contrast, when the specific surface area excessively increases, a ratio of the metal member 102 to the region in which the resin member 101 and the metal member 102 invade each other decreases, and thus mechanical strength of the region decreases. For this reason, it is considered that when the specific surface area is less than or equal to the upper limit value, mechanical strength of the region in which the resin member 101 and the metal member 102 invade each other is further improved, and as a result thereof, it is possible to further improve joining strength between the resin member 101 and the metal member 102.

As described above, it is assumed that when the specific surface area is in the range, the surface of the joining surface 103 joining to the resin member 101 has a structure with an excellent balance in which an anchor effect between the resin member 101 and the metal member 102 is able to be more strongly expressed.

### (Metal Material)

A metal material configuring the metal member 102 is not particularly limited, and as the metal material, iron, stainless steel, aluminum, an aluminum alloy, magnesium, a magnesium alloy, copper, a copper alloy, and the like are able to be included from a viewpoint of availability and price. One of these materials may be independently used, or a combination of two or more thereof may be used. Among them, from a point of light weight and high strength, aluminum and an aluminum alloy are preferable.

The shape of the metal member 102 is not particularly limited insofar as the metal member 102 includes the joining surface 103 joining to the resin member 101, and for example, is able to have a flat plate shape, a curved plate shape, a rod shape, a tube shape, a lump shape, and the like. In addition, the metal member 102 may be in the shape of a structure in which these shapes are combined. The metal member 102 having this shape is able to be obtained by processing the metal material described above using a known processing method.

In addition, the shape of the joining surface 103 joining to the resin member 101 is not particularly limited, and as the shape, a flat surface, a curved surface, and the like are included.

### (Forming Method of Joining Surface 103)

Next, a forming method of the joining surface 103 according to this embodiment will be described.

The joining surface 103 of the metal member 102 according to this embodiment, for example, is able to be formed by performing a chemical treatment with respect to the surface of the metal member 102 using a surface treatment agent. The chemical treatment with respect to the surface of the metal member 102 using the surface treatment agent was also performed in the related art. However, in this embodiment, factors such as (1) a combination of the metal member and the chemical treatment agent, (2) a temperature and a time of the chemical treatment, and (3) a post-treatment of the surface of the metal member after the chemical treatment are highly controlled. In order to obtain the joining surface 103 of the metal member 102 according to this embodiment, it is particularly important to highly control these factors.

Hereinafter, an example of a manufacturing method of the metal member 102 according to this embodiment will be described. However, the manufacturing method of the metal member 102 according to this embodiment is not limited to the following examples.

First, (1) the combination of the metal member and the surface treatment agent is selected.

When the metal member configured of iron or stainless steel is used, it is preferable that an aqueous solution in which an inorganic acid, a chlorine ion source, a cupric ion source, and a thiol-based compound are combined as necessary is selected.

When the metal member configured of aluminum or an aluminum alloy is used, it is preferable that an aqueous solution in which an alkali source, an amphoteric metal ion source, a nitric acid ion source, and a thiol compound are combined as necessary is selected.

When the metal member configured of magnesium or a magnesium alloy is used, an alkali source is used, and in particular, it is preferable that an aqueous solution of sodium hydroxide is selected.

When the metal member configured of copper or a copper alloy is used, it is preferable that an aqueous solution using at least one selected from an inorganic acid such as a nitric acid and a sulfuric acid, an organic acid such as an unsaturated carboxylic acid, a persulfate, hydrogen peroxide, azoles such as imidazole and derivatives thereof, tetrazole and derivatives thereof, aminotetrazole and derivatives thereof, and aminotriazole and derivatives thereof, pyridine derivatives, triazine, triazine derivatives, alkanolamine, alkylamine derivatives, polyalkylene glycol, sugar alcohol, a cupric ion source, a chlorine ion source, a phosphonic acid-based chelating agent, an oxidizing agent, and N,N-bis(2-hydroxyethyl)-N-cyclohexyl amine is selected.

Next, (2) the metal member is immersed in a surface treatment agent, and a chemical treatment is performed with respect to the surface of the metal member. At this time, the treatment temperature, for example, is 30°C. In addition, a treatment time is suitably determined by a material or a surface state of the metal member to be selected, a type or a concentration of the surface treatment agent, a treatment temperature, or the like, and for example, is 30 seconds to 300 seconds. At this time, it is important that an etching amount of the metal member in a depth direction is preferably greater than or equal to 3 µm, and more preferably greater than or equal to 5 µm. The etching amount of the metal member in the depth direction is able to be evaluated by being calculated from a weight, a specific weight, and the surface area of the dissolved metal member. The etching amount in the depth direction is able to be adjusted by the type or the concentration of the surface treatment agent, the treatment temperature, the treatment time, or the like.

Finally, the surface of the metal member after the chemical treatment is subjected to a post-treatment. First, the surface of the metal member is water cleaned and dried. Subsequently, the surface of the metal member which is subjected to the chemical treatment is treated by a nitric acid aqueous solution or the like.

According to the procedure described above, it is possible to obtain the metal member 102 including the joining surface 103 according to this embodiment.

### <Resin Member>

Next, the resin member 101 according to this embodiment will be described.

The resin member 101 is formed of the thermosetting resin composition (P) including the thermosetting resin as a resin component.

As the thermosetting resin (A) included in the thermosetting resin composition (P) according to this embodiment, a phenol resin (a), an epoxy resin, an unsaturated polyester resin, a diallyl phthalate resin, a melamine resin, an oxetane resin, a maleimide resin, and the like are used. One of these resins may be independently used, or a combination of two or more thereof may be used.

Among them, a phenol resin (a) having excellent heat resistance, machinability, mechanical properties, electric properties, adhesive properties, and abrasion resistance is used as defined in claim 1.

### (Phenol Resin (a))

The thermosetting resin composition (P) includes the phenol resin (a). As the phenol resin (a), for example, a novolak type phenol resin such as a phenol novolak resin, a cresol novolak resin, and a bisphenol A type novolak resin; a resol type phenol resin such as a methylol type resol resin, a dimethylene ether type resol resin, and an oil melted resol phenol resin which is melted by tung oil, linseed oil, walnut oil, or the like; an arylalkylene type phenol resin, and the like are included. One of these resins may be independently used, or a combination of two or more thereof may be used.

Among them, a novolak type phenol resin is preferable for a reason of excellent availability, low price, and workability by roll kneading, or the like.

In the phenol resin (a), when the novolak type phenol resin is used, in general, hexamethylene tetramine is used as a curing agent. The hexamethylene tetramine is not particularly limited, and a used amount of the hexamethylene tetramine is preferably 10 parts by mass to 25 parts by mass with respect to 100 parts by mass of the novolak type phenol resin, and is more preferably 13 parts by mass to 20 parts by mass. When the used amount of the hexamethylene tetramine is greater than or equal to lower limit value, it is possible to reduce a curing time at the time of molding. In addition, when the used amount of the hexamethylene tetramine is less than or equal to the upper limit value, it is possible to improve an appearance of a molded product.

### (Filling Material (b))

From a viewpoint of improving mechanical strength, it is preferable that the resin member 101 further includes a filling material (b). A content of the filling material (b) is preferably greater than or equal to 30 mass% and less than or equal to 80 mass%, and is more preferably greater than or equal to 40 mass% and less than or equal to 70 mass% when the entirety of the resin member 101 is 100 mass%. By setting the content of the filling material (b) to be in the range, it is possible to further improve mechanical strength of the obtained resin member 101 while improving workability of the thermosetting resin composition (P). In addition, by adjusting the type or the content of the filling material (b), it is possible to adjust a value of the linear expansion coefficient α_{R} of the obtained resin member 101.

As the filling material (b), for example, talc, calcined clay, uncalcined clay, mica, titanium oxide, alumina, silica, calcium carbonate, aluminum hydroxide, magnesium hydroxide, barium sulfate, calcium sulfate, calcium sulfite, zinc borate, barium metaborate, aluminum borate, calcium borate, sodium borate, aluminum nitride, boron nitride, silicon nitride, carbon fiber, aramid fiber, glass fiber, acrylic rubber, acrylonitrile butadiene rubber, and the like are included. One of these materials may be independently used, or a combination of two or more thereof may be used. Among them, glass fiber is preferable. When the glass fiber is used, it is possible to particularly improve mechanical strength of the resin member 101.

In addition, the filling material (b) may be subjected to a surface treatment using a coupling agent such as a silane coupling agent (c) described later.

### (Silane Coupling Agent (c))

The resin member 101 may further include the silane coupling agent (c). By including the silane coupling agent (c), it is possible to improve adhesiveness between the resin member 101 and the metal member 102. In addition, by including the silane coupling agent (c), affinity between the filling material (b) and the resin component is improved, and as a result thereof, it is possible to further improve mechanical strength of the resin member 101.

A content of the silane coupling agent (c) depends on a specific surface area of the filling material (b), and thus is not particularly limited, and is preferably greater than or equal to 0.01 parts by mass and less than or equal to 4.0 parts by mass with respect to 100 parts by mass of the filling material (b), and is more preferably greater than or equal to 0.1 parts by mass and less than or equal to 1.0 parts by mass. When the content of the silane coupling agent (c) is in the range, it is possible to further improve mechanical strength of the resin member 101 while sufficiently covering the filling material (b).

As the silane coupling agent (c), for example, epoxy group-containing alkoxysilane compound such as glycidoxypropyl trimethoxysilane, γ-glycidoxypropyl triethoxysilane, and β-(3,4-epoxycyclohexyl) ethyl trimethoxysilane; mercapto group-containing alkoxysilane compound such as γ-mercaptopropyl trimethoxysilane, and γ-mercaptopropyl triethoxysilane; ureido group-containing alkoxysilane compound such as γ-ureidopropyl triethoxysilane, γ-ureidopropyl trimethoxysilane, and γ-(2-ureidoethyl) aminopropyl trimethoxysilane; isocyanate group-containing alkoxysilane compound such as γ-isocyanatopropyl triethoxysilane, γ-isocyanatopropyl trimethoxysilane, γ-isocyanatopropyl methyldimethoxysilane, γ-isocyanatopropyl methyldiethoxysilane, γ-isocyanatopropyl ethyldimethoxysilane, γ-isocyanatopropyl ethyldiethoxysilane, and γ-isocyanatopropyl trichlorosilane; amino group-containing alkoxysilane compound such as γ-aminopropyl triethoxysilane, γ-(2-aminoethyl) aminopropyl methyldimethoxysilane, γ-(2-aminoethyl) aminopropyl trimethoxysilane, and γ-aminopropyl trimethoxysilane; hydroxyl group-containing alkoxysilane compound such as γ-hydroxypropyl trimethoxysilane, and γ-hydroxypropyl triethoxysilane, and the like are included.

One of these materials may be independently used, or a combination of two or more thereof may be used. Among them, it is particularly preferable that alkoxysilane having an epoxy group or an amino group, and alkoxysilane having a mercapto group are used together.

### (Thermosetting Resin Composition (P))

A manufacturing method of the thermosetting resin composition (P) is not particularly limited, and in general, the thermosetting resin composition (P) is able to be manufactured by a known method. For example, the following methods are included. First, the thermosetting resin (A), as necessary, the filling material (b), the silane coupling agent (c), a curing agent, an auxiliary curing agent, a release agent, a pigment, a flame retardant, a weathering agent, an antioxidizing agent, a plasticizing agent, a lubricating agent, a sliding agent, a foaming agent, and the like are blended and uniformly mixed. Subsequently, the obtained mixture is heated, melted, and kneaded by independently using a roll, a kneading device such as a co-kneader, and a twin-screw extruder, or by using a combination of a roll and other kneading devices. Finally, the obtained mixture is granulated or pulverized, and thus the thermosetting resin composition (P) is obtained.

The linear expansion coefficient α_{R} of the resin member 101 formed of the thermosetting resin composition (P) in the range from 25°C to the glass transition temperature is preferably greater than or equal to 10 ppm/°C and less than or equal to 50 ppm/°C, and is more preferably greater than or equal to 15 ppm/°C and less than or equal to 45 ppm/°C. When the linear expansion coefficient α_{R} is in the range, it is possible to further improve reliability of a temperature cycle of the metal resin composite body 100.

### <Manufacturing Method of Metal Resin Composite Body>

Next, a manufacturing method of the metal resin composite body 100 according to this embodiment will be described. The manufacturing method of the metal resin composite body 100 is not particularly limited, and as the method, for example, an injection molding method, a transfer molding method, a compression molding method, an injection compression molding method, and the like are included. Among them, an injection molding method is particularly suitable.

The manufacturing method of the metal resin composite body 100, for example, includes the following steps.
(1) A step of disposing the metal member 102 in which glossiness of a measurement angle of 60° of the joining surface 103 joining to at least the resin member 101 which is measured on the basis of ASTM-D523 is greater than or equal to 0.1 and less than or equal to 30 in a metal mold 105
(2) A step of joining the resin member 101 formed of the thermosetting resin composition (P) and the metal member 102 by injecting the thermosetting resin composition (P) into the metal mold 105, and by curing the thermosetting resin composition (P) in a state where at least a part of the thermosetting resin composition (P) is in contact with the joining surface 103

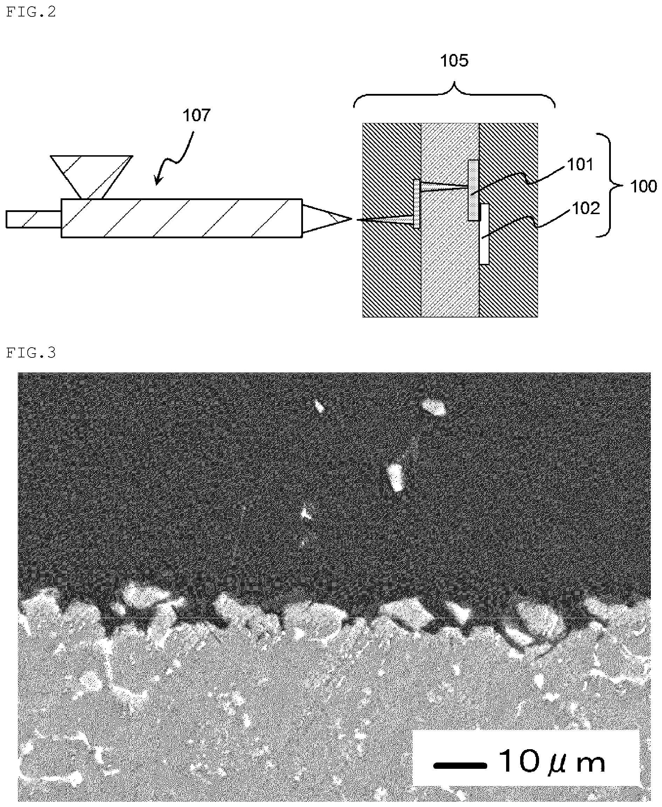

Hereinafter, the manufacturing method of the metal resin composite body 100 will be described by using an example in which an injection molding method is used. FIG. 2 is a cross-sectional view schematically illustrating of an example of a manufacturing device of the metal resin composite body 100 of the embodiment according to the present invention.

First, the metal mold 105 is prepared, and the metal member 102 is disposed in the metal mold 105. Subsequently, the thermosetting resin composition (P) is injected into the metal mold 105 by using an injection molding machine 107 such that at least a part of the thermosetting resin composition (P) is in contact with the joining surface 103 of the metal member 102. Then, the thermosetting resin composition (P) is cured in the state where at least a part of the thermosetting resin composition (P) is in contact with the joining surface 103. After that, the metal resin composite body 100 is extracted from the metal mold 105, and thus the metal resin composite body 100 is obtained.

The thermosetting resin composition (P) has high flowing properties for excellent molding. For this reason, in the thermosetting resin composition (P), a melt viscosity at 175°C is greater than or equal to 10 Pa · s and less than or equal to 3000 Pa · s, and is preferably greater than or equal to 30 Pa · s and less than or equal to 2000 Pa · s. The melt viscosity at 175°C, for example, is able to be measured by using a heat flow evaluation device (a flow tester) manufactured by Shimadzu Corporation.

In this embodiment, molding conditions of the metal resin composite body 100 are changed according to a molding method to be adopted, and thus are not particularly limited, and in general, known molding conditions are able to be adopted in a molding method to be adopted. When an injection molding method is used as the molding method, for example, a molding condition is able to be included in which a temperature of 160°C to 180°C, a pressure of 10 MPa to 30 MPa, and a curing time for 30 seconds to 5 minutes.

### (Usage)

The metal resin composite body 100 according to this embodiment has high productivity and high degree of freedom of shape control, and thus the metal resin composite body 100 is able to be applied to various usages. For example, the metal resin composite body 100 is able to be used in a component for an aircraft, a component for an automobile, a component for an electronic device, a component for a consumer electronics device, a component for an industrial equipment, and the like.

As described above, the embodiments of the present invention are described, but the embodiments are examples of the present invention, and other various configurations are able to be adopted.

### [Examples]

Hereinafter, this embodiment will be described in detail with reference to examples and comparative examples. Furthermore, this embodiment is not limited to these examples.

### (Example 1)

### <Preparation of Thermosetting Resin Composition (P1) >

37.5 mass% of a novolak type phenol resin (PR-51305, manufactured by Sumitomo Bakelite Co., Ltd.), 6.5 mass% of hexamethylene tetramine, 0.5 mass% of magnesium oxide, 53.0 mass% of glass fiber (CS3E479, manufactured by Nitto Boseki Co., Ltd.), 1 mass% of calcium stearate, 0.5 mass% of γ-aminopropyl triethoxysilane (KBE-903, manufactured by Shin-Etsu Chemical Co., Ltd.), and 1 mass% of Carbon Black are respectively dry mixed, are melt kneaded by using a heat roll of 90°C, are cooled into the shape of a sheet, and are pulverized, and thus a granular thermosetting resin composition (P1) was obtained. By using a flowing property evaluation device (a high flow tester, CFT-500D), a viscosity of the thermosetting resin composition at 175°C was measured, and was 1500 Pa · s.

### <Surface Treatment of Metal Member>

As an aluminum alloy sheet to which a surface treatment was not performed, an aluminum alloy sheet A (80 mm × 10 mm, and a thickness of 1.0mm) of alloy number ADC12 based on JIS H 5302 in which a surface thereof is sufficiently ground by abrasive-coated paper of #4000 was prepared.

An aqueous solution of KOH (16 mass%), zinc chloride (5 mass%), sodium nitrate (5 mass%), and sodium thiosulfate (13 mass%) was prepared. In the obtained aqueous solution (30°C), the aluminum alloy sheet A was immersed and oscillated, and was dissolved in a depth direction by 10 µm (calculated from a decreased weight of aluminum). Subsequently, the aluminum alloy sheet A was water cleaned, was immersed in 35 mass% of a nitric acid aqueous solution (30°C), and was oscillated for 20 seconds. After that, the aluminum alloy sheet A was water cleaned and dried, and thus an aluminum alloy sheet 1 was obtained.

### <Evaluation Method of Metal Member>

### (Measurement of Surface Roughness of Metal Member)

A surface shape of a metal member was measured at magnification of 50 by using a super-depth shape measurement microscope (VK9700, manufactured by Keyence Corporation). Surface roughnesses Ra and Rz were measured. Ra and Rz were measured on the basis of JIS-B0601.

### (Measurement of Specific Surface Area)

A measurement target sample was vacuum dried at 120°C for 6 hours, then a nitrogen adsorbed and desorbed amount at a liquid nitrogen temperature was measured by using an automatic specific surface area/fine pore distribution measurement device (BELSORPminiII, manufactured by BEL Japan, Inc.). A real surface area by using a nitrogen adsorption BET method was calculated from a BET plot. The real surface area measured by the nitrogen adsorption BET method was divided by an apparent surface area, and thus a specific surface area was calculated.

### (Measurement of Glossiness of Surface of Metal Member)

Glossiness of the surface of the metal member was measured at a measurement angle of 60° by using a digital gloss meter (20° and 60°) (GM-26 type, manufactured by Murakami Color Research Laboratory Co., Ltd.) on the basis of ASTM-D523.

### (Observation of Surface of Metal Member)

An image of the surface of the metal member was captured by an electron microscope (SEM), and a structure of a roughened layer existing on the surface of the metal member was observed. In FIG. 3, an electron microscope picture showing an enlarged view of a roughened layer existing on a surface of the aluminum alloy sheet 1 obtained in Example 1 is illustrated.

### (Measurement of Linear Expansion Coefficient α_{M})

A linear expansion coefficient α_{M} was measured by using a thermomechanical analyzing device TMA (EXSTAR6000, manufactured by TA Instruments.) in a compression condition of 5°C/min. The linear expansion coefficient α_{M} of the aluminum alloy sheet 1 was 23.0 ppm/°C.

### <Preparation of Metal Resin Composite Body>

A metal resin composite body 1 was prepared by using the obtained thermosetting resin composition (P1) and the aluminum alloy sheet 1. Specifically, the metal resin composite body 1 was prepared by the following procedure.

First, an aluminum alloy sheet 1 having a thickness of 1 mm was arranged in a metal mold. Subsequently, the thermosetting resin composition (P1) was heat melted such that the thickness after curing is 3 mm, and a predetermined amount of thermosetting resin composition (P1) was injected into the metal mold. Finally, the thermosetting resin composition (P1) was cured by compression molding, and thus the metal resin composite body 1 which is a two-layered sheet including a resin member sheet with a thickness of 3 mm and an aluminum alloy sheet 1 with a thickness of 1 mm. The metal resin composite body 1 was set to a test piece 1. Furthermore, in a compression molding condition, an effective pressure was 20 MPa, a metal mold temperature was 175°C, and a curing time was 3 minutes.

### (Bending Strength and Bending Elastic Modulus)

Bending strength and a bending elastic modulus of the obtained test piece was measured under an atmosphere of 25°C on the basis of JIS K 6911. At this time, the aluminum alloy sheet 1 was arranged on a lower side, and thus a test was performed. Here, a unit of the bending strength was MPa, and a unit of the bending elastic modulus was GPa.

(Peeled-off State after Bending Strength and Bending Elastic Modulus Test)

A peeled-off state of the test piece after the bending strength and bending elastic modulus test was observed, and was evaluated on the basis of the followings.
A: Complete adhesion was maintained after the test
B: Peeling-off was observed in a part
C: Peeling-off was obviously observed

### (Measurement of Linear Expansion Coefficient α_{R})

A linear expansion coefficient α_{R} of the resin member sheet was measured by using a thermomechanical analyzing device TMA (EXSTAR6000, manufactured by TA Instruments.) in a compression condition of 5°C/min. The linear expansion coefficient α_{R} of the resin member sheet having a thickness of 3 mm which was formed of the thermosetting resin composition (P1) was 17 ppm/°C in a flowing direction and 47 ppm/°C in a vertical direction, and an average value was 32 ppm/°C. Accordingly, a difference (α_{R} - α_{M}) in the linear expansion coefficient was 9 ppm/°C.

### (Example 2)

An aqueous solution of KOH (6 mass%), zinc chloride (5 mass%), calcium nitrate (22 mass%), and sodium thiosulfate (13 mass%) was prepared. In the obtained aqueous solution (30°C), the aluminum alloy sheet A which was used in Example 1 and was not subjected to a surface treatment was immersed and oscillated, and was dissolved in the depth direction by 5 µm (calculated from a decreased weight of aluminum). Subsequently, the aluminum alloy sheet A was water cleaned, was immersed in 35 mass% of a nitric acid aqueous solution (30°C), and was oscillated for 20 seconds. After that, the aluminum alloy sheet A was water cleaned and dried, and thus an aluminum alloy sheet 2 was obtained.

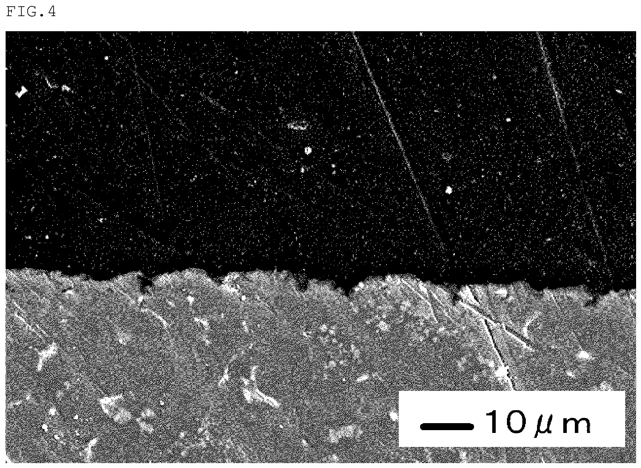

The same evaluation as that in Example 1 was performed with respect to the obtained aluminum alloy sheet 2. In addition, in FIG. 4, an electron microscope picture showing an enlarged view of a roughened layer existing on a surface of the aluminum alloy sheet 2 obtained in Example 2 is illustrated.

A metal resin composite body 2 was prepared by the same method as that in Example 1 except that the aluminum alloy sheet 2 was used instead of the aluminum alloy sheet 1. The metal resin composite body 2 was set to a test piece 2, and the same evaluation as that in Example 1 was performed.

### (Example 3)

An aqueous solution of KOH (6 mass%), zinc chloride (5 mass%), sodium nitrate (5 mass%), and sodium thiosulfate (13 mass%) was prepared. In the obtained aqueous solution (30°C), the aluminum alloy sheet A which was used in Example 1 and was not subjected to a surface treatment was immersed and oscillated, and was dissolved in the depth direction by 20 µm (calculated from a decreased weight of aluminum). Subsequently, the aluminum alloy sheet A was water cleaned, was immersed in 35 mass% of a nitric acid aqueous solution (30°C), and was oscillated for 20 seconds. After that, the aluminum alloy sheet A was water cleaned and dried, and thus an aluminum alloy sheet 3 was obtained.

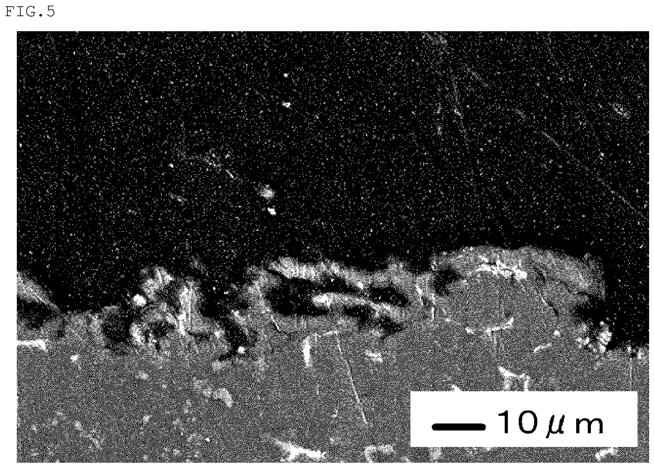

The same evaluation as that in Example 1 was performed with respect to the obtained aluminum alloy sheet 3. In addition, in FIG. 5, an electron microscope picture showing an enlarged view of a roughened layer existing on a surface of the aluminum alloy sheet 3 obtained in Example 3 is illustrated.

A metal resin composite body 3 was prepared by the same method as that in Example 1 except that the aluminum alloy sheet 3 was used instead of the aluminum alloy sheet 1. The metal resin composite body 3 was set to a test piece 3, and the same evaluation as that in Example 1 was performed.

### (Example 4)

A aqueous solution of KOH(6 mass%), zinc chloride (5 mass%), sodium nitrate (5 mass%), and sodium thiosulfate (13 mass%) was prepared. In the obtained aqueous solution (30°C), the aluminum alloy sheet A which was used in Example 1 and was not subjected to a surface treatment was immersed and oscillated, and was dissolved in the depth direction by 4 µm (calculated from a decreased weight of aluminum). Subsequently, the aluminum alloy sheet A was water cleaned, was immersed in 35 mass% of a nitric acid aqueous solution (30°C), and was oscillated for 20 seconds. After that, the aluminum alloy sheet A was water cleaned and dried, and thus an aluminum alloy sheet 4 was obtained.

The same evaluation as that in Example 1 was performed with respect to the obtained aluminum alloy sheet 4.

A metal resin composite body 4 was prepared by the same method as that in Example 1 except that the aluminum alloy sheet 4 was used instead of the aluminum alloy sheet 1. The metal resin composite body 4 was set to a test piece 4, and the same evaluation as that in Example 1 was performed.

### (Example 5)

An aqueous solution of KOH (6 mass%), zinc chloride (5 mass%), sodium nitrate (5 mass%), and sodium thiosulfate (13 mass%) was prepared. In the obtained aqueous solution (30°C), the aluminum alloy sheet A which was used in Example 1 and was not subjected to a surface treatment was immersed and oscillated, and was dissolved in the depth direction by 30 µm (calculated from a decreased weight of aluminum). Subsequently, the aluminum alloy sheet A was water cleaned, was immersed in 35 mass% of a nitric acid aqueous solution (30°C), and was oscillated for 20 seconds. After that, the aluminum alloy sheet A was water cleaned and dried, and thus an aluminum alloy sheet 5 was obtained.

The same evaluation as that in Example 1 was performed with respect to the obtained aluminum alloy sheet 5.

A metal resin composite body 5 was prepared by the same method as that in Example 1 except that the aluminum alloy sheet 5 was used instead of the aluminum alloy sheet 1. The metal resin composite body 5 was set to a test piece 5, and the same evaluation as that in Example 1 was performed.

### (Example 6)

An aqueous solution of KOH (6 mass%), zinc chloride (5 mass%), calcium nitrate (22 mass%), and sodium thiosulfate (13 mass%) was prepared. In the obtained aqueous solution (30°C), the aluminum alloy sheet A which was used in Example 1 and was not subjected to a surface treatment was immersed and oscillated, and was dissolved in the depth direction by 3 pm(calculated from a decreased weight of aluminum). Subsequently, the aluminum alloy sheet A was water cleaned, was immersed in 35 mass% of a nitric acid aqueous solution (30°C), and was oscillated for 20 seconds. After that, the aluminum alloy sheet A was water cleaned and dried, and thus an aluminum alloy sheet 6 was obtained.

The same evaluation as that in Example 1 was performed with respect to the obtained aluminum alloy sheet 6.

A metal resin composite body 6 was prepared by the same method as that in Example 1 except that the aluminum alloy sheet 6 was used instead of the aluminum alloy sheet 1. The metal resin composite body 6 was set to a test piece 6, and the same evaluation as that in Example 1 was performed.

### (Comparative Example 1)

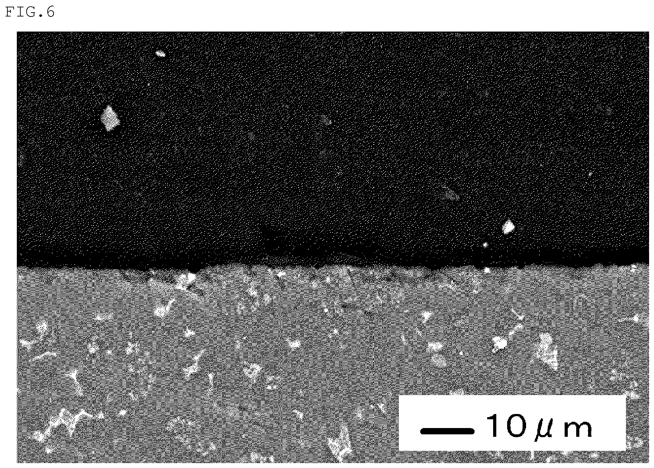

The same evaluation as that in Example 1 was performed with respect to the aluminum alloy sheet A which was used in Example 1 and was not subjected to a surface treatment. In addition, in FIG. 6, an electron microscope picture showing an enlarged view of a surface of an aluminum alloy sheet used in Comparative Example 1 is illustrated.

In addition, a metal resin composite body 7 was prepared by the same method as that in Example 1 except that the aluminum alloy sheet A which was not subjected to the surface treatment was used. The metal resin composite body 7 was set to a test piece 7, and the same evaluation as that in Example 1 was performed.

### (Comparative Example 2)

Waterproof abrasive paper of #80 was wetted with water, and then was disposed on a flat surface. Next, the aluminum alloy sheet A which was used in Example 1 and was not subjected to the surface treatment was reciprocated on the waterproof abrasive paper by a distance of approximately 10 cm for 10 times while being slightly pressed, and thus an aluminum alloy sheet 8 was obtained.

The same evaluation as that in Example 1 was performed with respect to the aluminum alloy sheet 8. In addition, in FIG. 7, an electron microscope picture showing an enlarged view of a surface of an aluminum alloy sheet used in Comparative Example 2 is illustrated.

A metal resin composite body 8 was prepared by the same method as that in Example 1 except that the aluminum alloy sheet 8 was used instead of the aluminum alloy sheet 1. The metal resin composite body 8 was set to a test piece 8, and the same evaluation as that in Example 1 was performed.

### (Comparative Example 3)

An aqueous solution of KOH (16 mass%), zinc chloride (5 mass%), sodium nitrate (5 mass%), and sodium thiosulfate (13 mass%) was prepared. In the obtained aqueous solution (30°C), the aluminum alloy sheet A which was used in Example 1 and was not subjected to a surface treatment was immersed and oscillated, and was dissolved in the depth direction by 3 µm (calculated from a decreased weight of aluminum). Subsequently, the aluminum alloy sheet A was water cleaned, was immersed in 35 mass% of a nitric acid aqueous solution (30°C), and was oscillated for 20 seconds. After that, the aluminum alloy sheet A was water cleaned and dried, and thus an aluminum alloy sheet 9 was obtained.

The same evaluation as that in Example 1 was performed with respect to the obtained aluminum alloy sheet 9.

A metal resin composite body 9 was prepared by the same method as that in Example 1 except that the aluminum alloy sheet 9 was used instead of the aluminum alloy sheet 1. The metal resin composite body 9 was set to a test piece 9, and the same evaluation as that in Example 1 was performed.

### (Comparative Example 4)

An aqueous solution of KOH (16 mass%), zinc chloride (5 mass%), sodium nitrate (5 mass%), and sodium thiosulfate (13 mass%) was prepared. In the obtained aqueous solution (30°C), the aluminum alloy sheet A which was used in Example 1 and was not subjected to a surface treatment was immersed and oscillated, and was dissolved in the depth direction by 100 µm (calculated from a decreased weight of aluminum). Subsequently, the aluminum alloy sheet A was water cleaned, was immersed in 35 mass% of a nitric acid aqueous solution (30°C), and was oscillated for 20 seconds. After that, the aluminum alloy sheet A was water cleaned and dried, and thus an aluminum alloy sheet 10 was obtained.

The same evaluation as that in Example 1 was performed with respect to the obtained aluminum alloy sheet 10.

A metal resin composite body 10 was prepared by the same method as that in Example 1 except that the aluminum alloy sheet 10 was used instead of the aluminum alloy sheet 1. The metal resin composite body 10 was set to a test piece 10, and the same evaluation as that in Example 1 was performed.

### (Comparative Example 5)

50 weight% of a 3-aminopropyl triethoxysilane aqueous solution was prepared, the aluminum alloy sheet A was immersed in the obtained aqueous solution (30°C) for an hour, and was dried at 100°C for 30 minutes, and thus an aluminum alloy sheet 11 was obtained.

The same evaluation as that in Example 1 was performed with respect to the obtained aluminum alloy sheet 11.

A metal resin composite body 11 was prepared by the same method as that in Example 1 except that the aluminum alloy sheet 11 was used instead of the aluminum alloy sheet 1. The metal resin composite body 11 was set to a test piece 11, and the same evaluation as that in Example 1 was performed.

### (Comparative Example 6)

A resin member sheet 1 was prepared by the same method as that in Example 1 except that the aluminum alloy sheet was not used. The resin member sheet 1 was set to a test piece 12, and the same evaluation as that in Example 1 was performed.

Evaluation results thereof are shown in Table 1.

**[Table 1]**

| | Examples | | | | | | Comparative Examples | | | | | |
|---|---|---|---|---|---|---|---|---|---|---|---|---|
| Evaluation Items | 1 | 2 | 3 | 4 | 5 | 6 | 1 | 2 | 3 | 4 | 5 | 6 |
| Thickness of Roughened Layer (µm) | 10 | 6 | 20 | 4 | 30 | 3 | 0.5 | 2 | 3 | 100 | 0.5 | - |
| Surface Roughness Rz (µm) | 10.1 | 6.5 | 21.4 | 4.2 | 26.8 | 2.5 | 2.6 | 7.0 | 3.8 | 52.3 | 2.6 | - |
| Surface Roughness Ra (µm) | 1.7 | 1.1 | 5.2 | 1.3 | 6.2 | 2.6 | 0.6 | 1.5 | 3 | 6.7 | 0.6 | - |
| BET Real Surface Area/Apparent Surface Area | 220 | 160 | 270 | 110 | 370 | 70 | 50 | 80 | 80 | 2000 | 50 | - |
| Glossiness | 2 | 15 | 4 | 25 | 1 | 27 | 260 | 40 | 34 | 0 | 260 | - |
| Bending Strength (MPa) | 280 | 290 | 320 | 275 | 270 | 230 | 130 | 110 | 190 | 180 | 220 | 130 |
| Bending Elastic Modulus (GPa) | 23.0 | 29.0 | 22.5 | 26.5 | 26 | 25 | 11.5 | 12.5 | 21.5 | 22 | 20.0 | 13.0 |
| Peeled-off State After Bending Test | A | A | A | A | A | A | C | C | B | B | B | - |

## Claims

1. A metal resin composite body (100) in which a resin member (101) formed of a thermosetting resin composition and a metal member (102) are joined,
**characterized in that** the metal resin composite body (100) is formed by joining the metal member (102) in which glossiness of a measurement angle of 60° of a joining surface joining to at least the resin member (101) measured on the basis of ASTM-D523 is greater than or equal to 0.1 and less than or equal to 30, and the resin member (101), wherein a melt viscosity of the thermosetting resin composition at 175°C is greater than or equal to 10 Pa · s and less than or equal to 3000 Pa · s, and
wherein the thermosetting resin composition includes a phenol resin.

2. The metal resin composite body (100) according to Claim 1,
wherein the joining surface of the metal member (102) includes a plurality of concave portions (201), and
a cross-sectional shape of the concave portion (201) has a cross-sectional width greater than a cross-sectional width of an opening portion (203) of the concave portion (201) in at least a part between the opening portion (203) and a bottom portion (205) of the concave portion (201).

3. The metal resin composite body (100) according to Claim 2,
wherein a roughened layer in which the plurality of concave portions (201) are disposed is formed on the joining surface (103) of the metal member (102), and
a thickness of the roughened layer is greater than or equal to 3 µm and less than or equal to 40 µm.

4. The metal resin composite body (100) according to Claim 2 or 3,
wherein a depth of the concave portion (201) is in a range greater than or equal to 0.5 µm and less than or equal to 40 µm.

5. The metal resin composite body (100) according to any one of Claims 1 to 4,
wherein an absolute value of a difference (α_{R} - α_{M}) between a linear expansion coefficient α_{R} of the resin member (101) in a range from 25°C to a glass transition temperature and a linear expansion coefficient α_{M} of the metal member (102) in a range from 25°C to the glass transition temperature of the resin member (101) is less than or equal to 25 ppm/°C.

6. The metal resin composite body (100) according to Claim 5,
wherein the linear expansion coefficient α_{R} of the resin member (101) in the range from 25°C to the glass transition temperature is greater than or equal to 10 ppm/°C and less than or equal to 50 ppm/°C.

7. The metal resin composite body (100) according to any one of Claims 1 to 6,
wherein the resin member (101) and the metal member (102) are joined without providing an adhesive layer therebetween.

8. The metal resin composite body (100) according to Claim 1,
wherein the phenol resin is at least one selected from a group consisting of a novolak type phenol resin, a resol type phenol resin, and an arylalkylene type phenol resin.

9. The metal resin composite body (100) according to any one of Claims 1 to 8,
wherein the resin member (101) includes a filling material, and
a content of the filling material is greater than or equal to 30 mass% and less than or equal to 80 mass% when the entirety of the resin member (101) is 100 mass%.

10. The metal resin composite body (100) according to Claim 9,
wherein the filling material is at least one selected from a group consisting of talc, calcined clay, uncalcined clay, mica, titanium oxide, alumina, silica, calcium carbonate, aluminum hydroxide, magnesium hydroxide, barium sulfate, calcium sulfate, calcium sulfite, zinc borate, barium metaborate, aluminum borate, calcium borate, sodium borate, aluminum nitride, boron nitride, silicon nitride, carbon fiber, aramid fiber, glass fiber, acrylic rubber, and acrylonitrile butadiene rubber.

11. The metal resin composite body (100) according to Claim 9 or 10,
wherein the resin member (101) further includes a silane coupling agent, and
a content of the silane coupling agent is greater than or equal to 0.01 parts by mass and less than or equal to 4.0 parts by mass with respect to 100 parts by mass of the filling material.

12. The metal resin composite body (100) according to any one of Claims 1 to 11,
wherein the metal member (102) includes at least one metal material selected from a group consisting of iron, stainless steel, aluminum, an aluminum alloy, magnesium, a magnesium alloy, copper, and a copper alloy.

13. A manufacturing method of the metal resin composite body (100) according to any one of Claims 1 to 12, comprising:
a step of disposing the metal member (102) in which glossiness of a measurement angle of 60° of the joining surface (103) joining to at least the resin member (101) measured on the basis of ASTM-D523 is greater than or equal to 0.1 and less than or equal to 30 in a metal mold (105); and
a step of joining the resin member (101) formed of the thermosetting resin composition and the metal member (102) by injecting the thermosetting resin composition into the metal mold (105), and by curing the thermosetting resin composition in a state in which at least a part of the thermosetting resin composition is in contact with the joining surface (103).

## Patentansprüche

1. Metallharzverbundwerkstoffkörper (100), wobei ein Harzelement (101), das aus einer wärmehartbaren Harzzusammensetzung ausgebildet ist, und ein Metallelement (102) verbunden sind,
**dadurch gekennzeichnet, dass** der Metallharzverbundwerkstoffkörper (100) durch Verbindung des Metallelements (102), in welchem der Glanz eines Messwinkels von 60° einer Verbindungsoberfläche, die mit wenigstens dem Harzelement (101) verbunden ist, gemessen auf der Basis von ASTM-D523, wenigstens 0,1 und höchstens 30 beträgt, und das Harzelement (101) ausgebildet wird, wobei eine Schmelzviskosität der wärmehärtbaren Harzzusammensetzung bei 175 °C wenigstens 10 Pa-s und höchstens 3000 Pa-s beträgt, und
wobei die wärmehartbare Harzzusammensetzung ein Phenolharz beinhaltet.

2. Metallharzverbundwerkstoffkörper (100) nach Anspruch 1,
wobei die Verbindungsoberfläche des Metallelements (102) mehrere konkave Abschnitte (201) beinhaltet, und
eine Querschnittsform des konkaven Abschnitts (201) eine Querschnittsbreite aufweist, die über eine Querschnittsbreite eines Öffnungsabschnitts (203) des konkaven Abschnitts (201) in wenigstens einem Teil zwischen dem Öffnungsabschnitt (203) und einem unteren Abschnitt (205) des konkaven Abschnitts (201) ist.

3. Metallharzverbundwerkstoffkörper (100) nach Anspruch 2,
wobei eine aufgeraute Schicht, in der die mehreren konkaven Abschnitte (201) angeordnet sind, auf der Verbindungsoberfläche (103) des Metallelements (102) ausgebildet ist, und
eine Dicke der aufgerauten Schicht wenigstens 3 µm und höchstens 40 µm beträgt.

4. Metallharzverbundwerkstoffkörper (100) nach Anspruch 2 oder 3,
wobei eine Tiefe des konkaven Abschnitts (201) in einem Bereich von wenigstens 0,5 µm und höchstens 40 µm liegt.

5. Metallharzverbundwerkstoffkörper (100) nach einem der Ansprüche 1 bis 4,
wobei ein absoluter Wert einer Differenz (α_{R} - α_{M}) zwischen einem linearen Expansionskoeffizienten α_{R} des Harzelements (101) in einem Bereich von 25 °C bis zu einer Glasübergangstemperatur und einem linearen Expansionskoeffizienten α_{M} des Metallelements (102) in einem Bereich von 25 °C bis zu der Glasübergangstemperatur des Harzelements (101) höchstens 25 ppm/°C beträgt.

6. Metallharzverbundwerkstoffkörper (100) nach Anspruch 5,
wobei der lineare Ausdehnungskoeffizient α_{R} des Harzelements (101) in dem Bereich von 25 °C bis zu der Glasübergangstemperatur wenigstens 10 ppm/°C und höchstens 50 ppm/°C beträgt.

7. Metallharzverbundwerkstoffkörper (100) nach einem der Ansprüche 1 bis 6,
wobei das Harzelement (101) und das Metallelement (102), ohne eine Klebstoffschicht dazwischen bereitzustellen, verbunden sind.

8. Metallharzverbundwerkstoffkörper (100) nach Anspruch 1,
wobei das Phenolharz wenigstens eines ist, das aus einer Gruppe ausgewählt ist, die aus einem Novolakartigen Phenolharz, einem Resolartigen Phenolharz und einem Arylalkylenartigen Phenolharz besteht.

9. Metallharzverbundwerkstoffkörper (100) nach einem der Ansprüche 1 bis 8,
wobei das Harzelement (101) ein Füllmaterial beinhaltet, und
ein Gehalt des Füllmaterials wenigstens 30 Massen-% beträgt und höchstens 80 Massen-%, wenn die Gesamtheit des Harzelements (101) 100 Massen-% beträgt.

10. Metallharzverbundwerkstoffkörper (100) nach Anspruch 9,
wobei das Füllmaterial wenigstens eines ist, das aus einer Gruppe ausgewählt ist, die aus Talk, kalziniertem Ton, unkalziniertem Ton, Glimmer, Titanoxid, Aluminiumoxid, Siliciumdioxid, Calciumcarbonat, Aluminiumhydroxid, Magnesiumhydroxid, Bariumsulfat, Calciumsulfat, Calciumsulfit, Zinkborat, Bariummetaborat, Aluminiumborat, Calciumborat, Natriumborat, Aluminiumnitrid, Bornitrid, Siliciumnitrid, Kohlenstofffaser, Aramidfaser, Glasfaser, Acrylkautschuk und Acrylnitril-Butadienkautschuk besteht.

11. Metallharzverbundwerkstoffkörper (100) nach Anspruch 9 oder 10,
wobei das Harzelement (101) ferner einen Silanhaftvermittler beinhaltet, und
ein Gehalt des Silanhaftvermittlers wenigstens 0,01 Massenteilen und höchstens 4,0 Massenteilen bezogen auf 100 Massenteile des Füllmaterials, beträgt.

12. Metallharzverbundwerkstoffkörper (100) nach einem der Ansprüche 1 bis 11,
wobei das Metallelement (102) wenigstens ein Metallmaterial beinhaltet, das aus einer Gruppe ausgewählt ist, das aus Eisen, rostfreiem Stahl, Aluminium, einer Aluminiumlegierung, Magnesium, einer Magnesiumlegierung, Kupfer und einer Kupferlegierung besteht.

13. Herstellungsverfahren des Metallharzverbundwerkstoffkörpers (100) nach einem der Ansprüche 1 bis 12, Folgendes umfassend:
einen Schritt des Anordnens des Metallelements (102), wobei der Glanz eines Messwinkels von 60° der Verbindungsoberfläche (103), die sich mit wenigstens dem Harzelement (101) verbindet, gemessen auf der Basis von ASTM-D523, wenigstens 0,1 und höchstens 30 in einer Metallform (105) beträgt; und
einen Schritt des Verbindens des Harzelements (101), das aus der wärmehärtbaren Harzzusammensetzung und dem Metallelement (102) ausgebildet ist, durch Einspritzen der wärmehärtbaren Harzzusammensetzung in die Metallform (105) und durch Härten der wärmehärtbaren Harzzusammensetzung in einem Zustand, wobei wenigstens ein Teil der wärmehartbaren Harzzusammensetzung in Berührung mit der Verbindungsoberfläche (103) ist.

## Revendications

1. Corps composite en résine métallique (100) dans lequel un élément en résine (101) formé d'une composition de résine thermodurcissante et un élément métallique (102) sont joints,
**caractérisé en ce que** le corps composite en résine métallique (100) est formé en joignant l'élément métallique (102) dans lequel la brillance d'un angle de mesure de 60 ° d'une surface de jonction se joignant au moins à l'élément en résine (101) mesuré sur la base de ASTM-D523 est supérieur ou égal à 0,1 et inférieur ou égal à 30, et l'élément en résine (101), dans lequel une viscosité à l'état fondu de la composition de résine thermodurcissante à 175 °C est supérieure ou égale à 10 Pa·s et inférieure ou égale à 3000 Pa·s, et
dans lequel la composition de résine thermodurcissante comporte une résine de phénolique.

2. Corps composite en résine métallique (100) selon la revendication 1,
dans lequel la surface de jonction de l'élément métallique (102) comporte une pluralité de parties concaves (201), et
une forme de section transversale de la partie concave (201) présente une largeur de section transversale supérieure à une largeur de section transversale d'une partie d'ouverture (203) de la partie concave (201) dans au moins une partie entre la partie d'ouverture (203) et une partie inférieure (205) de la partie concave (201).

3. Corps composite en résine métallique (100) selon la revendication 2,
dans lequel une couche rugueuse dans laquelle la pluralité de parties concaves (201) sont disposées est formée sur la surface de jonction (103) de l'élément métallique (102), et
une épaisseur de la couche rugueuse est supérieure ou égale à 3 µm et inférieure ou égale à 40 µm.

4. Corps composite en résine métallique (100) selon la revendication 2 ou 3,
dans lequel une profondeur de la partie concave (201) est dans une plage supérieure ou égale à 0,5 µm et inférieure ou égale à 40 µm.

5. Corps composite en résine métallique (100) selon l'une quelconque des revendications 1 à 4,
dans lequel une valeur absolue d'une différence (α_{R} - α_{M}) entre un coefficient de dilatation linéaire α_{R} de l'élément en résine (101) dans une plage de 25 °C à une température de transition vitreuse et un coefficient de dilatation linéaire α_{M} de l'élément métallique (102) dans une plage de 25 °C à la température de transition vitreuse de l'élément en résine (101) est inférieur ou égal à 25 ppm / °C.

6. Corps composite en résine métallique (100) selon la revendication 5,
dans lequel le coefficient de dilatation linéaire α_{R} de l'élément en résine (101) dans la plage de 25 °C à la température de transition vitreuse est supérieur ou égal à 10 ppm / °C et inférieur ou égal à 50 ppm / °C.

7. Corps composite en résine métallique (100) selon l'une quelconque des revendications 1 à 6,
dans lequel l'élément en résine (101) et l'élément métallique (102) sont joints sans fournir de couche adhésive entre eux.

8. Corps composite en résine métallique (100) selon la revendication 1,
dans lequel la résine phénolique est au moins une résine choisie dans un groupe constitué d'une résine phénolique de type novolaque, d'une résine phénolique de type résol et d'une résine phénolique de type arylalkylène.

9. Corps composite en résine métallique (100) selon l'une quelconque des revendications 1 à 8,
dans lequel l'élément en résine (101) comporte un matériau de remplissage, et
une teneur en matériau de remplissage est supérieure ou égale à 30 % en masse et inférieure ou égale à 80 % en masse lorsque la totalité de l'élément en résine (101) est de 100 % en masse.

10. Corps composite en résine métallique (100) selon la revendication 9,
dans lequel le matériau de remplissage est au moins un matériau choisi dans un groupe constitué de talc, d'argile calcinée, d'argile non calcinée, de mica, d'oxyde de titane, d'alumine, de silice, de carbonate de calcium, d'hydroxyde d'aluminium, d'hydroxyde de magnésium, de sulfate de baryum, de sulfate de calcium, de sulfate de calcium, borate de zinc, de métaborate de baryum, de borate d'aluminium, de borate de calcium, de borate de sodium, de nitrure d'aluminium, de nitrure de bore, de nitrure de silicium, de fibre de carbone, de fibre aramide, de fibre de verre, de caoutchouc acrylique et de caoutchouc de butadiène acrylonitrile.

11. Corps composite en résine métallique (100) selon la revendication 9 ou 10,
dans lequel l'élément en résine (101) comporte en outre un agent de couplage silanique, et
une teneur en agent de couplage silanique est supérieure ou égale à 0,01 partie en masse et inférieure ou égale à 4,0 parties en masse par rapport à 100 parties en masse du matériau de remplissage.

12. Corps composite en résine métallique (100) selon l'une quelconque des revendications 1 à 11,
dans lequel l'élément métallique (102) comporte au moins un matériau métallique choisi dans un groupe constitué de fer, d'acier inoxydable, d'aluminium, d'un alliage d'aluminium, de magnésium, d'un alliage de magnésium, de cuivre et d'un alliage de cuivre.

13. Procédé de fabrication du corps composite en résine métallique (100) selon l'une quelconque des revendications 1 à 12, comprenant :
une étape de disposition de l'élément métallique (102) dans laquelle la brillance d'un angle de mesure de 60 ° de la surface de jonction (103) se joignant au moins à l'élément en résine (101) mesuré sur la base de la norme ASTM-D523 est supérieure ou égale à 0,1 et inférieure ou égale à 30 dans un moule métallique (105) ; et
une étape de jonction de l'élément en résine (101) formé de la composition de résine thermodurcissante et de l'élément métallique (102) en injectant la composition de résine thermodurcissante dans le moule métallique (105), et en durcissant la composition de résine thermodurcissante dans un état dans lequel au moins une partie de la composition de résine thermodurcissante est en contact avec la surface de jonction (103).
